Europäisches Patentamt

European Patent Office

Office européen des brevets

(19)

(11) Veröffentlichungsnummer: **0 016 724**
**B1**

(12)                    **EUROPÄISCHE PATENTSCHRIFT**

(45) Veröffentlichungstag der Patentschrift:
**11.07.84**

(21) Anmeldenummer: **80810056.4**

(22) Anmeldetag: **15.02.80**

(51) Int. Cl.³: **D 05 B 23/00**

(54) Vorrichtung zur Vermittlung von Angaben zur Einstellung und Ausrüstung einer Nähmaschine.

(30) Priorität: **15.03.79 CH 2442/79**
    **02.05.79 CH 4084/79**

(43) Veröffentlichungstag der Anmeldung:
**01.10.80 Patentblatt 80/20**

(45) Bekanntmachung des Hinweises auf die Patenterteilung:
**11.07.84 Patentblatt 84/28**

(84) Benannte Vertragsstaaten:
**DE FR GB IT SE**

(56) Entgegenhaltungen:
**DE - A - 2 444 189**
**DE - A - 2 504 627**
**US - A - 3 596 254**
**US - A - 3 613 610**
**US - A - 3 871 310**
**US - A - 4 079 683**
**US - A - 4 100 865**

(73) Patentinhaber: **FRITZ GEGAUF AG**
**BERNINA-NAEHMASCHINENFABRIK, Seestrasse,**
**CH-8266 Steckborn (CH)**

(72) Erfinder: **Widmer, Hans, Hauptstrasse 208,**
**CH-2532 Magglingen (CH)**

(74) Vertreter: **Steiner, Martin et al, c/o AMMANN**
**PATENTANWAELTE AG BERN Schwarztorstrasse 31,**
**CH-3001 Bern (CH)**

## Beschreibung

Die vorliegende Erfindung betrifft eine Vorrichtung zur Vermittlung von Angaben zur Einstellung und Ausrüstung einer Nähmaschine mit bekannten Antriebs- und Steuervorrichtungen für die am Nähvorgang beteiligten Maschinenteile und diesen Steuervorrichtungen zugeordneten, manuell bedienbaren Einstellvorrichtungen. Die Einstellmöglichkeiten moderner Nähmaschinen unter Berücksichtigung des Nähvorgangs und des zu nähenden Materials sind so weitgehend, dass das Bedürfnis besteht, für eine Mindestzahl typischer Nähvorgänge und Materialien der Bedienungsperson Angaben über die Einstellung der Maschine bzw. die Verwendung bestimmter Zubehörteile, eines bestimmten Nähgarns und dergleichen zu vermitteln. Es ist bereits bekannt, solche Angaben tabellarisch zusammengestellt an der Innenseite und unter einem aufklappbaren Deckel des Nähmaschinengehäuses anzubringen (US-PS 4079683) oder aber eine unter einem aufklappbaren Deckel des Nähmaschinengehäuses angeordnete gefaltete Tabelle zur Ablesung zu entfalten (US-PS 3871310). Solche tabellarische Angaben haben jedoch wesentliche Nachteile. Die Zahl von Kombinationen von Voraussetzungen für den Nähvorgang für die auf der Tabelle Instruktionen zur Einstellung und Ausrüstung der Nähmaschine enthalten sein können, ist auf alle Fälle sehr begrenzt. Je grösser die Tabelle und die Kombination vorgebbarer Bedingungen und ablesbarer Informationen ist, um so unübersichtlicher wird das Lesen der Tabelle und um so leichter können dabei Fehler unterlaufen. Zum Einrichten der Maschine ist es auch nicht besonders praktisch, wenn dabei an der Maschine etwas verändert werden muss, beispielsweise ein Deckel aufzuklappen ist. Es ist das Ziel vorliegender Erfindung zur Vermeidung der genannten Nachteile bestehender Lösungen eine Vorrichtung zu schaffen, welche wesentlich weitergehende Informationen zu vermitteln im Stande ist, ohne dass dabei Irrtümer in der Ablesung möglich sind und ohne dass an der Nähmaschine zusätzliche Änderungen vorzunehmen sind.

Dieses Ziel wird erfindungsgemäss erreicht durch eine Eingabevorrichtung, die beliebige Kombinationen aller für den Nähvorgang relevanter Daten betreffend Art des Nähgutes und auszuführende Nähoperation einzugeben gestattet, durch die Eingabevorrichtung gemäss der genannten Kombination von Daten adressierbare programmierte Speicher, in welchen vollständige Kombinationen von zur Ausführung verschiedener Näharbeiten auf unterschiedlichem Nähgut idealen Einstellwerte oder -bereiche für die Nähmaschine sowie für das für die Arbeiten erforderliche Zubehör, wie Nähfuss, Nadel, Nähgarn, usw. gespeichert sind, und durch mit dem Speicher verbindbare Anzeigemittel, welche gleichzeitig an mehreren getrennten Stellen oder sequentiell jeweils eine gespeicherte Kombination einzelner Einstellwerte oder -bereiche und Zubehör anzuzeigen gestatten. Die einzelnen Daten bzw. Bedingungen für den Nähvorgang können nacheinander einzeln eingegeben werden, worauf die Instruktionen zur Einstellung und Ausrüstung der Maschine unmissverständlich angegeben werden, wodurch Irrtümer ausgeschlossen werden und die optimale Einstellung und Ausrüstung der Maschine auch für Personen zweifelsfrei möglich wird, die keine erhebliche Näherfahrung besitzen.

Die Erfindung wird nun anhand zweier in der Zeichnung dargestellter Ausführungsbeispiele näher erläutert.

Fig. 1 zeigt eine perspektivische Ansicht der ersten Vorrichtung,

Fig. 2 zeigt eine Draufsicht der geöffneten Vorrichtung im Betriebszustand in grösserem Massstab,

Fig. 3 zeigt eine perspektivische Ansicht einer Nähmaschine gemäss dem zweiten Ausführungsbeispiel und

Fig. 4 zeigt eine Draufsicht auf ein mit der Nähmaschine verbundenes Gerät im Bertriebszustand.

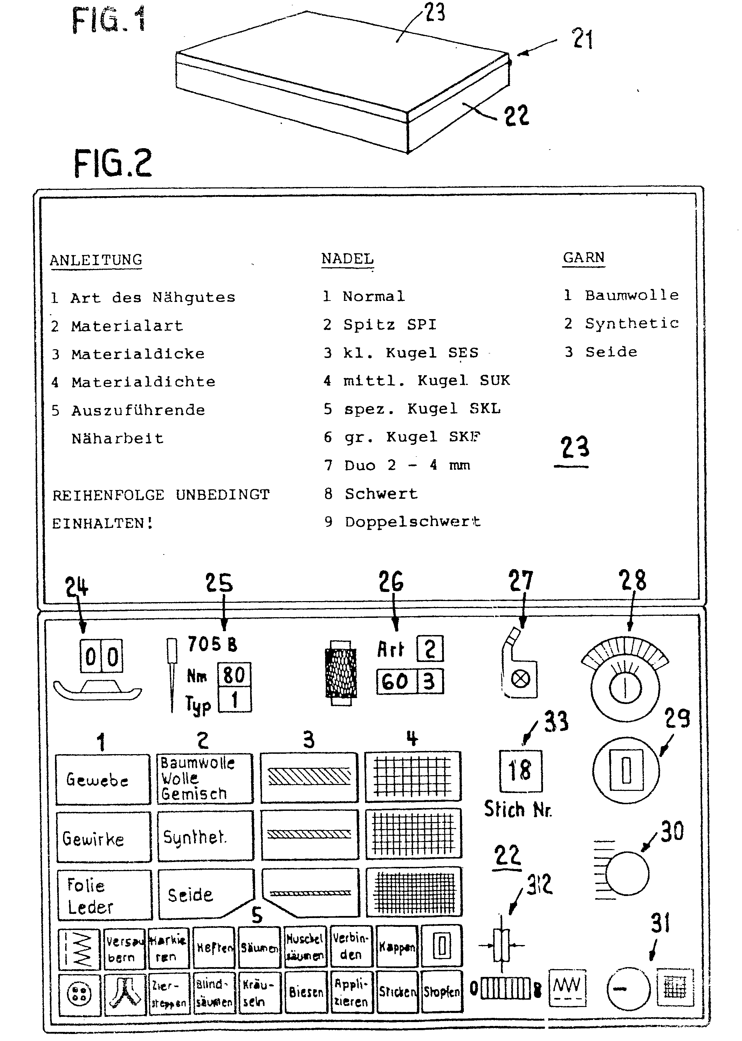

Die Vorrichtung nach Fig. 1 und 2 ist als flacher Kasten 21 mit Unterteil 22 und Deckel 23 in der Grösse und Ausführung ähnlich etwa einem Taschenrechner ausgebildet. Im geschlossenen Zustand gemäss Fig. 1 ist die Elektronik automatisch ausgeschaltet und sie kann automatisch eingeschaltet werden, wenn der Deckel geöffnet wird.

Bei geöffnetem Deckel 23 gemäss Fig. 2 erscheint an der Innenseite des Deckels eine Anleitung bzw. bestimmte Angaben während am Unterteil 22 eine Eingabetastatur mit den Sektoren 1–5 zugänglich wird. Auf der Deckplatte des Unterteils 22 sind verschiedene Anzeigen mit Symbolen vorgesehen. Wie Fig. 2 erkennen lässt, dienen die drei Tasten der Sektion 1 der Eingabe von Daten betreffend die Art des Nähgutes, nämlich Gewebe, Gewirke und Folie oder Leder. Die Tasten der Sektion 2 gestatten weitere Angaben über das Nähgut einzugeben, nämlich beispielsweise Baumwolle, Wolle oder Gemisch, synthetisches Gewebe oder Seide. Die Tasten der Sektion 3 gestatten die Eingabe von Daten über die Dicke des Nähgutes, nämlich dünnes, mittleres und dickes Nähgut. Die Tasten der Sektion 4 gestatten Daten über die Dichte des Gewebes oder Gewirkes einzugeben. Die Tasten der Sektion 5 gestatten verschiedenste Näharten einzugeben, die teils durch Symbole, teils durch Worte angegeben sind.

Die Anzeigen, die beispielsweise durch Leuchtdioden oder Flüssigkristalle wirksam gemacht werden können, umfassen einmal eine Anzeige 24, die durch ein Symbol den Nähfuss bezeichnet und mit einer zweistelligen digitalen Anzeige die Nähfussnummer anzeigen kann, welche durch geeignete Mittel auch auf dem Nähfuss angebracht ist. Die Anzeige 25 betrifft die Nähnadel, was ebenfalls durch ein Symbol angedeutet ist. Eine zweifeldrige Anzeige gestattet die Stärke und den Typ der Nadel anzugeben. Die Anzeige 26 betrifft das zu verwendende Nähgarn, was ebenfalls durch ein Symbol angedeutet ist. Ein dreifeldrige Anzeige vermittelt Angaben über die Stärke und Beschaffenheit des zu verwendenden Garnes. Die Anzeige 27 wird aktiviert, wenn für bestimmte Näharten, beispielsweise zum Knopfloch nähen, die symbolisch dargestellte Unterfadenführung einzusetzen ist. Die Anzeige 28, bei welcher die entsprechenden Einstellmittel und Skalen der Nähmaschine dargestellt sind, weist eine Anzahl von Anzeigefeldern auf, die individuell wirksam werden können, um die Stichbreite und die Stichfeldlage einzustellen. Die Bedienungsperson braucht dann lediglich die entsprechenden Elemente an der Nähmaschine in die angezeigte Stellung zu bringen. Die Anzeige 29 vermittelt Hinweise zum Knopfloch nähen. Die Anzeige 30, die wiederum eine Skala von individuell wirksam werdenden Feldern aufweist, zeigt die Stichlänge an, wobei wiederum das entsprechende Einstellelement an der Nähmaschine an der dort angebrachten entsprechenden Skala in die Lage gebracht werden muss, die an der Skala der Anzeige 30 angezeigt wird. Die Anzeige 31 zeigt an, in welcher Stellung ein entsprechend ausgebildetes Einstellorgan an der Nähmaschine zu bringen ist, um den Nähgutvorschub wirksam oder unwirksam zu machen; die eine Stellung betrifft Stopfen und Freihandsticken, die andere Nähen. Die Anzeige 32 betrifft die Fadenspannung, und auch hier wird der einzustellende zwischen 0–8 liegende Wert durch ein leuchtendes Feld der Skala angezeigt. Die Anzeige 33 betrifft die Nummer des einzustellenden Stichmusters.

Zur Einstellung der Nähmaschine gibt die Bedienungsperson mittels der Tastenfelder 1–5 alle Daten ein, nämlich Materialart, Materialdicke und auszuführende Näharbeit. Wenn dieser Vorgang beendet ist, d. h. wenn die entsprechenden Tasten der Sektion 1–5 betätigt worden sind, erfolgt automatisch die Anzeige für die Einstellung und Ausrüstung der Nähmaschine. Die einzelnen Anzeigen sind oben bereits beschrieben worden. Die Bedienungsperson wechselt nötigenfalls die Zubehörteile und das Garn und nimmt dann die erforderlichen Einstellungen gemäss Anzeige 28 bis 33 vor.

Es leuchtet ohne weiteres ein, dass mittels des dargestellten Hilfsgerätes eine sehr vielseitige Vorwahl von Bedingungen und Anzeigen von Instruktionen unter Ausschluss von Irrtümern möglich ist.

Um das Einstellen und Ausrüsten der Nähmaschine noch einfacher und sicherer zu gestalten, können die Anzeigen mindestens teilweise an der Nähmaschine den Einstellorganen und Ausrüstungsstellen zugeordnet sein.

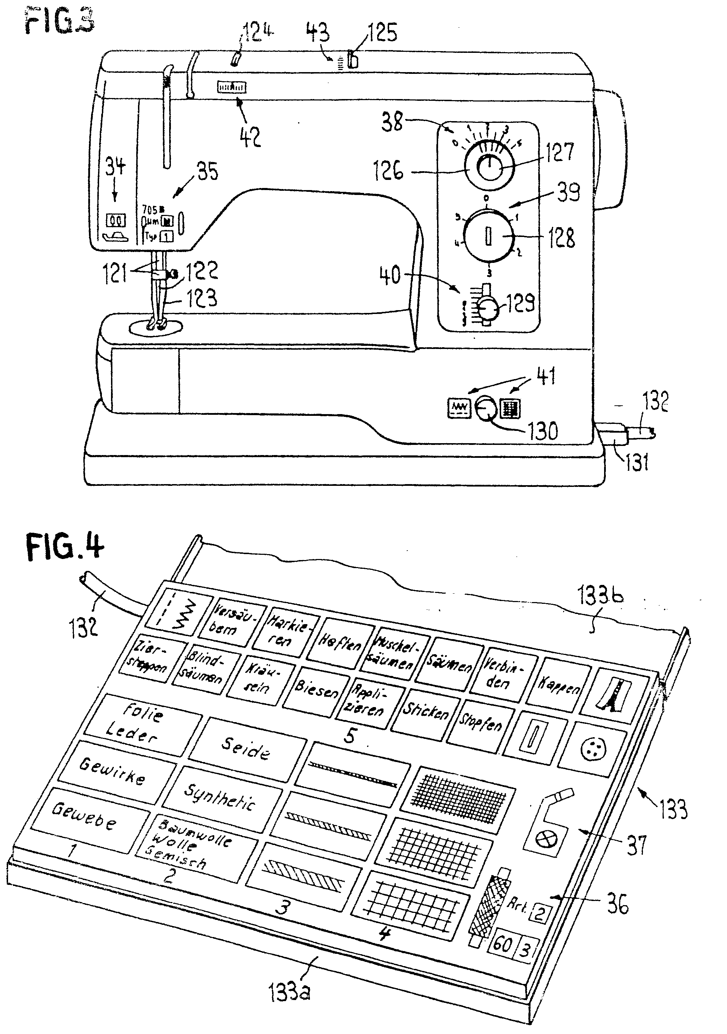

Die einzelnen Daten bzw. Bedingungen für den Nähvorgang können hierbei nacheinander einzeln eingegeben werden, worauf die Instruktionen zur Einstellung und Ausrüstung grösstenteils oder vollständig und in unmissverständlicher Weise an den Einstell- und Ausrüstungsstellen der Maschine selbst erscheinen, wodurch Einstellung und Ausrüstung der Maschine ganz besonders einfach und zuverlässig erfolgen kann. Eine derartige Ausführung ist in den Fig. 3 und 4 dargestellt, in welchen entsprechende Teile gleich gezeichnet sind wie in Fig. 1 und 2.

Die in Fig. 3 dargestellte Nähmaschine weist die üblichen Organe zum Einstellen und Ausrüsten derselben auf, nämlich die Nadelstange 121, in welcher die Nähnadel 122 befestigt werden kann, die Nähfussstange 123, an welcher der Nähfuss auswechselbar befestigt ist, ein Einstellrad 124 für die Fadenspannung, einen Wählhebel 125 für verschiedene Zierstiche, einen drehbaren Einstellknopf 126 für die Stichbreite, einen drehbaren Einstellknopf 127 für die Stichfeldlage, einen Bedienungsknopf 128 für das Knopflochnähen, einen verschiebbaren Einstellknopf 129 zur Wahl der Stichlänge und einen Umschaltknopf 130 zur Vorwahl von Nähen einerseits oder Stopfen/Freihandsticken anderseits.

Die Nähmaschine ist mittels eines Mehrfachsteckers 131 und eines flexiblen Kabels 132 trennbar mit dem Gerät 133 nach Fig. 4 verbunden, das weitgehend dem Gerät nach Fig. 1 und 2 entspricht.

Dieses Gerät ist als flacher Kasten 133 mit Unterteil 133a und Deckel 133b ausgebildet.

Bei geöffnetem Deckel erscheint gemäss Fig. 2 an der Innenseite des Deckels eine Anleitung bzw. bestimmte Angaben während am Unterteil 133a eine Eingabetastatur mit den Sektoren 1–5 zugänglich wird, die derjenigen nach Fig. 2 entspricht. Auf der Deckplatte des Unterteils sind verschiedene Anzeigen mit Symbolen vorgesehen.

Die Anzeigen, die beispielsweise durch Leuchtdioden oder Flüssigkristalle wirksam gemacht werden können, umfassen einem eine Anzeige 34 am Mascheinengehäuse über dem Nähfuss, die durch ein Symbol den Nähfuss bezeichnet und mit einer zweistelligen digitalen Anzeige die Nähfussnummer anzeigen kann, welche durch geeignete Mittel auch auf dem Nähfuss angebracht ist. Die Anzeige 35, die über der Nadelstange angeordnet ist, betrifft die Nähnadel, was ebenfalls durch ein Symbol angedeutet ist. Eine zweifeldrige Anzeige gestattet die Stärke und den Typ der Nadel anzugeben. Die Anzeige 36, die sich im Gerät 133 befindet, betrifft das zu verwendende Nähgarn, was ebenfalls durch eine Symbol angedeutet ist. Eine dreifeldrige Anzeige 36 vermittelt Angaben über die Stärke und Beschaffenheit des zu verwendenden Garnes. Die Anzeige 37 des Gerätes wird aktiviert, wenn für bestimmte Näharten, beispielsweise zum Knopfloch nähen, die symbolisch dargestellte Unterfadenführung einzusetzen ist. Die Anzeige 38, die bei den entsprechenden Einstellknöpfen 126 und 127 der Nähmaschine als Skalen ausgebildet ist, weist eine Anzahl von Anzeigefeldern auf, die individuell wirksam werden können, um die Stichbreite und die Stichfeldlage anzuzeigen. Die Bedienungsperson braucht dann lediglich die entsprechenden Elemente 126 und 127 an der Nähmaschine in die angezeigte Stellung zu bringen. Die Anzeige 39 vermittelt Hinweise zum Knopfloch nähen. Die Anzeige 40, die wiederum eine Skala von individuell wirksam werdenden Feldern aufweist, zeigt die Stichlänge an, wobei wiederum das entsprechende Einstellelement 129 an der Nähmaschine an der dort angebrachten entsprechenden Skala in die Lage gebracht werden muss, die an der Skala der Anzeige 40 angezeigt wird. Die Anzeige 41 zeigt an, in welche Stellung das Einstellorgan 130 zu bringen ist, um den Nähgutvorschub wirksam oder unwirksam zu machen; die eine Stellung betrifft Stopfen und Freihandsticken, die andere Nähen. Die Anzeige 42 betrifft die Fadenspannung, und auch hier wird der einzustellende zwischen 0–8 liegende Wert durch ein leuchtendes Feld der Skala angezeigt. Unmittelbar neben der Anzeige kann die Fadenspannung mittels des Rades 124 eingestellt werden. Die Anzeige 43 betrifft die Nummer des einzustellenden Stichmusters und sie erlaubt eine direkte Einstellung ds daneben liegenden Wählhebels 125.

Die Einstellung und Ausrüstung der Nähmaschine erfolgt wie oben anhand der Fig. 1 und 2 beschrieben.

Das Gerät 133 kann auch nicht trennbar, mittels eines beidseitig fest montierten Kabels mit der Nähmaschine verbunden sein. Es wäre auch denkbar, das Gerät direkt mit der Maschine zu verbinden, indem an einer freien Stelle der Maschine die Eingabetastatur vorgesehen ist.

Auch die Anzeigen 36 und 37 können an geeigneten Stellen der Maschine angeordnet sein und zwar in der Nähe der Stellen, wo das Nähgarn bzw. die Unterfadenführung anzubringen sind.

Anstelle der dargestellten Eingabetastatur kann ein anderes Eingabesystem, z.B. mit Sensoren, einer Telephonwählscheibe oder dergleichen vorgesehen sein. Dabei können die variablen Daten auf einem Ziffernschlüssel verzeichnet sein, und die Eingabe in das Gerät erfolgt in diesem Falle in je einer Ziffernfolge, z.B. mittels der erwähnten Telephonscheibe. Der Ziffernschlüssel kann auf einem Teil des Gerätes, z.B. an der Innenseite des Deckels 133b angebracht sein. Das Gerät kann auch eine Vorrichtung zum Aufwinden der flexiblen Leitung aufweisen. Es könnte ein Rückmeldesystem mit einem optischen Signalgeber vorgesehen sein, das prüft und anzeigt, ob die Nähmaschine zum Ausführen der in das Gerät eingegebenen Näharbeit richtig eingestellt ist oder nicht, d.h., ob alle Einstellungen den Anzeigen entsprechend vorgenommen worden sind.

Es kann von Vorteil sein, eine sequentielle Eingabe der Daten vorzusehen und/oder die Einstellwerte oder -bereiche für die Nähmaschine sowie das für die Arbeiten erforderliche Zubehör sequentiell anzuzeigen. Eine sequentielle Dateneingabe wäre mit einer stark vereinfachten und gut überblickbaren Eingabetastatur möglich, so dass das Gerät relativ klein konzipiert werden könnte.

Die sequentielle Anzeige der Angaben für Einstellung und Ausrüstung der Nähmaschine erleichtert das Erstellen der Nähbereitschaft der Maschine erheblich und schliesst aus, das Einstellungen unterlassen oder vergessen werden. Das aufeinanderfolgende Erscheinen der Anzeigen an den Einstellorganen und Ausrüstungsstellen zwingt die Bedienungsperson dazu die Einstellung und Ausrüstung der Maschine schrittweise nach programmiertem Ablauf vorzunehmen und den erfolgten Einstell- und/oder Ausrüstungsvorgang auf einer separaten Taste zu quittieren, worauf erst die nächste Anzeige erscheint. Wie bereits erwähnt, könnte nach Beendigung aller Einstell- und Ausrüstungsvorgänge eine optische Rückmeldung die Nähbereitschaft der Maschine anzeigen.

Bei den dargestellten Ausführungsbeispielen werden nur Angaben oder Instruktionen zur Ausrüstung und Einstellung der Nähmaschine vermittelt. Es ist aber möglich, mittels entsprechend aufgebauter Vorrichtung zusätzlich Angaben zur Bedienung der Maschine beim Nähvorgang zu vermitteln. Solche Instruktionen können vor allem beim Annähen von Knöpfen, dem Knopflochnähen oder dergleichen vermittelt werden. Um solche Anweisungen zu vermitteln, kann eine Anzeige mit Segmenten oder Punkten vorgesehen sein, auf welcher nacheinander, vorzugsweise in bewegter Schrift, Teile der Anweisungstexte erscheinen. Solche Anzeigen zur Vermittlung von Anweisungstexten können für alle Informationen, also auch für die Einstellung und Ausrüstung der Nähmaschine vorhanden sein. Anderseits könnten auch beliebige Anweisungen akustisch ab Tonband vermittelt werden.

## Patentansprüche

1. Vorrichtung zur Vermittlung von Angaben zur Einstellung und Ausrüstung einer Nähmaschine mit bekannten Antriebs- und Steuervorrichtungen für die am Nähvorgang beteiligten Maschinenteile und diesen Steuervorrrichtungen zugeordneten, manuell bedienbaren Einstellvorrichtungen, gekennzeichnet durch eine Eingabevorrichtung (1–5), die beliebige Kombinationen aller für den Nähvorgang relevanter Daten betreffend Art des Nähgutes und auszuführende Nähoperation einzugeben gestattet, durch die Eingabevorrichtung gemäss der genannten Kombination von Daten adressierbare programmierte Speicher, in welchen vollständige Kombinationen von zur Ausführung verschiedener Näharbeiten auf unterschiedlichem Nähgut idealen Einstelwerte oder -bereiche für die Nähmaschine sowie das für die Arbeiten erforderliche Zubehör, wie Nähfuss, Nadel, Nähgarn usw. gespeichert sind, und durch mit dem Speicher verbindbare Anzeigemittel (24–33 bzw. 34–43), welche gleichzeitig an mehreren getrennten Stellen oder sequentiell jeweils eine gespeicherte Kombination einzelner Einstellwerte oder -bereiche und Zubehör anzuzeigen gestatten.

2. Vorrichtung nach Anspruch 1, dadurch gekennzeichnet, dass sie als mobiles Tischgerät (22, 23 bzw. 133), z.B. nach Art eines Taschenrechners, ausgebildet ist.

3. Vorrichtung nach Anspruch 1, dadurch gekennzeichnet, dass sie fest oder beweglich an der Nähmaschine angeordnet ist.

4. Vorrichtung nach Anspruch 1, dadurch gekennzeichnet, dass sie im Zubehörbehälter integriert ist.

5. Vorrichtung nach einem der Ansprüche 1 bis 4, gekennzeichnet durch Anzeigemittel für eine digitale und/oder alphanumerische Anzeige der Einstellwerte oder -bereiche und des Zubehörs.

6. Vorrichtung nach einem der Ansprüche 1 bis 5, dadurch gekennzeichnet, dass die Anzeigemittel für die Einstellwerte oder -bereiche analog, diejenigen für die Anzeige des Zubehörs jedoch digital und/oder alphanumerisch arbeiten.

7. Vorrichtung nach einem der Ansprüche 1 bis 6, dadurch gekennzeichnet, dass die Anordnung von Anzeigemitteln (28–31) für die Einstellwerte oder -bereiche auf dem Anzeigegerät der Anordnung der zugeordneten Einstellvorrichtungen (126–130) an der Nähmaschine entspricht.

8. Einrichtung nach Anspruch 3, dadurch gekennzeichnet, dass die Anzeigemittel (34–43) mindestens teilsweise an der Nähmaschine angeordnet und den Einstellorganen (124–130) und Ausrüstungsstellen (121–123) zugeordnet sind.

9. Einrichtung nach Anspruch 8, dadurch gekennzeichnet, dass die optischen Anzeigemittel (28, 30; 38–40, 42, 43) Skalen aus einzeln aktivierbaren Anzeigefeldern aufweisen, die bei den zugeordneten Einstellorganen (124–130) der Nähmaschine derart angeordnet sind, dass die Einstellung auf die aktivierte Skalenstelle erfolgen kann.

10. Einrichtung nach Anspruch 8 oder 9, dadurch gekennzeichnet, dass das Gerät mittels einer flexiblen Steuerleitung (132) fest oder über eine Mehrfachsteckverbindung (131) lösbar mit der Nähmaschine verbunden ist.

11. Einrichtung nach einem der Ansprüche 8 bis 10, dadurch gekennzeichnet, dass ein Rückmeldesystem mit einem optischen Signalgeber vorgesehen ist, welches anzeigt, ob die Maschine zum Ausführen der in das Gerät eingegebenen Näharbeit eingestellt ist oder nicht.

12. Vorrichtung nach einem der Ansprüche 1 bis 11, dadurch gekennzeichnet, dass eine Einrichtung zur sequentiellen Eingabe der Daten vorgesehen ist.

13. Vorrichtung nach einem der Ansprüche 1 bis 12, dadurch gekennzeichnet, dass auch Mittel zur Speicherung und Vermittlung von Anweisungen zur Bedienung der Maschine bzw. des zu verarbeitenden Materials während des Nähvorgans vorgesehen sind.

## Claims

1. Device for giving instructions for operating and fitting attachments to a sewing machine with known drive and control devices for the machine parts involved in the sewing operation and manually operated adjustement devices assigned to these control devices, charcterized in that an input device (1–5) permits to introduce any combination of relevant data for the sewing operation regarding the material type and the sewing operation to be performed, programmed memories addressable by the input device according to the said combination of data in which are memorized complete combinations of optimum adjustment values or ranges for the sewing machine for performing different sewing operations on different materials in addition to the accessory data required for the sewing operations such as foot, needle, thread and so on, and display means (24–33, resp. 34–43) connected to the memory for displaying simultaneously or sequentially each time at many places apart a memorized combination of individual adjustment values or ranges and accessory data.

2. Device according to claim 1, characterized in that it is designed as a mobile tabletop unit (22, 33, resp. 133) e.g. similar in design to a pocket calculator.

3. Device according to claim 1, characterized in that it is incorporated in or removably mounted on the sewing machine.

4. Device according to claim 1, characterized in that it is integrated in the accessory compartment.

5. Device according to one of the claims 1 to 4, characterized in that it comprises display means for a digital or alphanumeric display of the adjustment values or ranges and the accessory data.

6. Device according to one of the claims 1 to 5, comprising an analog display for the adjustment values or ranges but the display for the accessories is digital and/or alphanumeric.

7. Device according to one of the claims 1 to 6, characterized in that the layout of the display means (28–31) for the adjustment values or ranges on the device correspond to the layout of the associated adjustment devices (126–130) on the sewing machine.

8. Device according to claim 3, characterized in that at last some of the display means (34–43) are grouped on the sewing machine and are associated to adjustment elements (124–130) and fitting attachments places (121–123).

9. Device according to claim 8, characterized in that the optical display means (28, 30; 48–40, 42, 43) comprise sclaes consisting of individually operable display fields which are arranged for the assigned adjustment elements (124–130) of the sewing machine in such a manner that adjustment can be performed on the activated scale.

10. Device according to claim 8 or 9, characterized in that the device is connected firmly to the sewing machine by means of a flexible power cord (132) or removably by means of a multicontat connector (131).

11. Device according to one of the claims 8 to 10, characterized in that it comprises an acknowledgement system with an optical signalling unit which indicates whether or not the sewing machine is ready to perform the entered sewing operation.

12. Device according to one of the claims 1 to 11, characterized in that it comprises a sequential data input unit.

13. Device according to one of the claims 1 to 12, characterized in that it also cmprises means for storage and provision of instructions for the machine operation and for the material to be processed during the sewing operation.

## Revendications

1. Dispositif pour indiquer les réglages et les accessoires à utiliser sur une machine à coudre, avec des dispositifs connus d'entraînement et de commande pour les parties de la machine participant à l'opération de couture et des dispositifs de réglage actionnés manuellement corespondant à ces dispositifs de commande, caractérisé en ce qu'un dispositifs d'entrée (1–5) permet d'indtroduire des combinaisons quelconques de données adéquates pour l'opération de couture concernant le genre de matériel et l'opération de couture à exécuter, des mémoires programmables adressables par le dispositifs d'entré selon ladite combinaison de données dans lesquelles sont mémorisées des combinaisons complètes de valeurs ou domaines de réglage idéaux pour la machine à coudre pour exécuter différentes opérations de couture sur diférents matériaux ainsi que les données relatives aux accessoires nécessaires pour l'opération de couture, telles que pied, aiguille, fil etc., et des moyens d'affichage (24–33 resp. 34–43) connectés à la mémoire pour afficher simultanément ou séquentiellement chaque fois en plusiers endroits séparés une combinaison mémorisée de valeurs ou domaines de réglage individuels et les données relatives aux accessoires.

2. Dispositif selon la revendication 1, caractérisé en ce qu'il est conçu comme un appareil de table amovible (22, 23, resp. 133), par exemple de conception similaire à celle d'un calculateur de poche.

3. Dispositif selon la revendication 1, caractérisé en ce qu'il est incorporé dans ou monté de manière amovible sur la machine à coudre.

4. Dispositif selon la revendication 1, caractérisé en ce qu'il est intégré dans le compartiment des accessoires.

5. Dispositif selon l'une des revendications 1 à 4, caractérisé en ce qu'il comprend des moyens d'affichage pour un affichage digital ou alphanumérique des valeurs ou domaines de réglage et de données relatives aux accessoires.

6. Dispositif selon l'une des revendications 1 à 5, caractérisé en ce qu'il comprend un affichage analogique pour les valeurs ou domaines de réglage mais que l'affichage des accessoires est digital ou alphanumérique.

7. Dispositif selon l'une des revendications 1 à 6, caractérisé en ce que la disposition des moyens d'affichage (28–31) pour les valeurs ou domaines de réglage sur le dispositif correspond à la disposition des dispositifs de réglage associés (126–130) sur la machine à coudre.

8. Dispositif selon la revendication 3, caractérisé en ce qu'une partie au moins des moyens d'affichage (34–43) sont disposés sur la machine à coudre et associés aux organes de réglage (124–130) et aux endroits de montage des accessoires (121–123).

9. Dispositif selon la revendication 8, caractérisé en ce que les moyens d'affichage optiques (28, 30; 38–40, 42, 43) comprennent des échelles formées de champs d'affichage susceptibles d'être activés individuellement qui sont disposés de telle manière près des organes de réglage associés (124–130) de la machine à coudre que le réglage peut être exécuté sur la partie activée de l'échelle.

10. Dispositif selon la revendication 8 ou 9, caractérisé en ce que la dispositif est connecté à la machine à coudre par un câble réseau flexible (132), de manière fixe ou de manière amovible à l'aide d'un connecteur multi-contact (131).

11. Dispositif selon l'une des revendications 8 à 10, caractérisé en ce qu'il comprend un système de quittance avec un indicateur optique indiquant si la machine est ajustée ou non pour l'exécution du travail de couture indtroduit dans la machine.

12. Dispositif selon l'une des revendications 1 à 11, caractérisé en ce qu'il comprend un dispositif d'entrée séquentielle des données.

13. Dispositif selon l'une des revendications 1 à 12, caractérisé en ce qu'il comprend aussi des moyens pour le stockage et la délivrance d'instructions pour l'utlilisation de la machine, respectivement pour le matériel à travailler pendant l'opératin de couture.

**0016724**

## FIG.1

23
21
22

## FIG.2

| ANLEITUNG | NADEL | GARN |
|---|---|---|
| 1 Art des Nähgutes | 1 Normal | 1 Baumwolle |
| 2 Materialart | 2 Spitz SPI | 2 Synthetic |
| 3 Materialdicke | 3 kl. Kugel SES | 3 Seide |
| 4 Materialdichte | 4 mittl. Kugel SUK | |
| 5 Auszuführende | 5 spez. Kugel SKL | |
|   Näharbeit | 6 gr. Kugel SKF | 23 |
| | 7 Duo 2 – 4 mm | |
| REIHENFOLGE UNBEDINGT | 8 Schwert | |
| EINHALTEN! | 9 Doppelschwert | |

24  25  26  27  28

00

705 B
Nm 80
Typ 1

Art 2
60 3

33

29

18
Stich Nr.

22

30

312

31

5

| 1 | 2 | 3 | 4 |
|---|---|---|---|
| Gewebe | Baumwolle Wolle Gemisch | | |
| Gewirke | Synthet. | | |
| Folie Leder | Seide | | |

| | Versäubern | Markieren | Heften | Säumen | Muschelsäumen | Verbinden | Kappen | |
|---|---|---|---|---|---|---|---|---|
| | Ziersteppen | Blindsäumen | Kräuseln | Biesen | Applizieren | Sticken | Stopfen | |

0 8

**FIG.3**

**FIG.4**